(19) Europäisches Patentamt
European Patent Office
Office européen des brevets

(11) EP 4 023 718 A1

(12) EUROPEAN PATENT APPLICATION

(43) Date of publication:
**06.07.2022 Bulletin 2022/27**

(21) Application number: **20217997.4**

(22) Date of filing: **31.12.2020**

(51) International Patent Classification (IPC):
***C08L 67/02*** *(2006.01)* ***C08L 69/00*** *(2006.01)*
*C08G 63/64* *(2006.01)* *C08G 63/199* *(2006.01)*
*C08G 65/26* *(2006.01)* *C08G 69/40* *(2006.01)*
*C08G 69/44* *(2006.01)*

(52) Cooperative Patent Classification (CPC):
(C-Sets available)
**C08L 67/02; C08L 69/00; C08L 69/005;**
C08G 63/199; C08G 63/64; C08G 65/2633;
C08G 69/40; C08G 69/44; C08L 2201/04;
C08L 2201/10; C08L 2205/025; C08L 2205/035

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **LUGGER, Jody Ann Martin**
  **4612 PX Bergen op Zoom (NL)**
- **TER HORST, Sascha Jan**
  **4612 PX Bergen op Zoom (NL)**
- **VAN HEERBEEK, Hendrikus Petrus Cornelis**
  **4612 PX Bergen op Zoom (NL)**
- **VAN DER MEE, Mark Adrianus Johannes**
  **4612 PX Bergen op Zoom (NL)**

(74) Representative: **Dehns**
**St. Bride's House**
**10 Salisbury Square**
**London EC4Y 8JD (GB)**

# (54) TRANSPARENT WEATHERABLE ELECTRICALLY CONDUCTIVE POLYCARBONATE BLEND COMPOSITIONS

(57) A thermoplastic composition includes: (a) from about 5 wt% to about 75 wt% of a polycarbonate component; (b) from about 10 wt% to about 60 wt% of a low refractive index polyester that is miscible with polycarbonate; (c) from about 10 wt% to about 30 % of an inherently dissipative polymer (IDP) having a refractive index at room temperature of at least 1.50; and (d) from about 5 wt% to about 75 wt% of a copolymer comprising polycarbonate and isophthalate terephthalate resorcinol (ITR).

EP 4 023 718 A1

(52) Cooperative Patent Classification (CPC): (Cont.)

C-Sets
**C08L 67/02, C08L 67/025, C08L 69/00, C08L 69/005;**
**C08L 67/02, C08L 69/00, C08L 69/005, C08L 77/12;**
**C08L 67/02, C08L 69/00, C08L 69/005, C08L 87/005;**
**C08L 67/02, C08L 69/005, C08L 77/12, C08L 83/10;**
**C08L 69/00, C08L 67/02, C08L 67/025, C08L 69/005;**
**C08L 69/00, C08L 67/02, C08L 69/005;**
**C08L 69/00, C08L 67/02, C08L 69/005, C08L 77/12;**
**C08L 69/00, C08L 67/02, C08L 69/005, C08L 87/005;**
**C08L 69/005, C08L 67/02, C08L 67/025, C08L 69/00;**
**C08L 69/005, C08L 67/02, C08L 69/00, C08L 77/12;**
**C08L 69/005, C08L 67/02, C08L 69/00, C08L 87/005**

## Description

### FIELD OF THE DISCLOSURE

The present disclosure relates to polycarbonate (PC) compositions having good electrostatic discharge (ESD) properties, and in particular PC compositions that include an inherently dissipative polymer (IDP).

### BACKGROUND OF THE DISCLOSURE

For certain industrial lighting and other applications there is need to satisfy ATEX ("Appareils destinés à être utilises en ATmosphères Explosives") regulations; particularly in the European Union. ATEX standards require materials to have an electrostatic discharge (ESD) in the E-8 to E-12 range, or alternatively to have an appropriate static decay. For lighting applications, other requirements exist relating to impact, heat, weatherability, and heat ageing properties. Transparent ESD polymer grades exist on the market, but suffer from excessive yellowing when exposed to UV light, especially in combination with moisture and/or heat. This is typically solved by putting an ultraviolet (UV) coating on a transparent resin like polycarbonate (PC); conductive materials may also be included in such polymers to prevent electrical discharge. Thermoplastic materials having a combination of good ageing, transparency and ESD properties are not available for a molded-in-color resins, however.

These and other shortcomings are addressed by aspects of the present disclosure.

### SUMMARY

Aspects of the disclosure relate to a thermoplastic composition including: (a) from about 5 wt% to about 75 wt% of a polycarbonate component; (b) from about 10 wt% to about 60 wt% of a low refractive index polyester that is miscible with polycarbonate; (c) from about 10 wt% to about 30 % of an inherently dissipative polymer (IDP) having a refractive index at room temperature of at least 1.50; and (d) from about 5 wt% to about 75 wt% of a copolymer comprising polycarbonate and isophthalate terephthalate resorcinol (ITR). The combined weight percent value of all components does not exceed 100 wt. %, and all weight percent values are based on the total weight of the composition.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

#### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

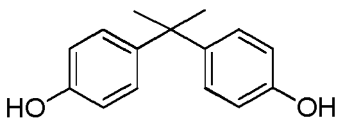

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

To get transparent compositions having good ESD properties, there is a need to match the refractive index (RI) of the IDP with the resin matrix. Typically, IDP's have an RI in the range of 1.53 or lower. Standard polycarbonate resin weathers relatively poorly and has an RI of 1.58. The present disclosure relates to technologies to developed to match an IDP with the resin matrix. For example an IDP having a RI of 1.53 with polycarbonate using PCCD as a blend component (with an RI of 1.51).

Commercial polyester-polycarbonates such as those including polycarbonate and isophthalate terephthalate resorcinol (ITR) - such as LEXAN® SLX polymers (SABIC) - have excellent weatherability properties, but have a higher refractive index (1.61) as compared to conventional polycarbonate (PC). This requires an optimization of the blend

composition to match the resin matrix RI to the IDP.

Using a similar methodology for conventional PC instead of a polyester-polycarbonate (e.g., SLX), higher loadings of a low Tg/high-heat polyester such as poly(1,4-cyclohexylenedimethylene 1,4-cyclohexanedicarboxylate) (PCCD) may be required. Further improvements can be made by including a polycarbonate-siloxane (PC-Si) copolymer to match the RI of the matrix and provide with better heat and impact retention properties compared to mixtures including just PC and PCCD. The resin components (PC, low Tg resin such as PCCD and PC-Si copolymer) are optimized to achieve good transparency properties, and a polyester-polycarbonate (e.g., SLX copolymer) is added for weatherability and to match the RI of the IDP while maintaining sufficient heat and impact properties. Alternative high-heat polyesters are also a possible means to further tune the refractive index of the blend (e.g., Akestra™ 110 or polycaprolactone). In addition, boosting of the HDT can be done using a copoly(carbonate) including polycarbonate and 3,3-bis(4-hydroxyphenyl)-2-phenylisoindolin-1-one (PPPBP) such as XHT resin available from SABIC. XHT has a higher RI compared to PC. Other suitable copoly(carbonates) that could be used in aspects of the disclosure include, but are not limited to, the Apec® polycarbonate copolymers, available from Covestro. Yet a further suitable copoly(carbonates) that could be used in aspects of the disclosure includes, polycarbonate and bisphenol isophorone (BPI). Also in this case incorporating the PC-Si copolymer can prove to beneficial for the overall transmission performance.

In specific aspects, a thermoplastic composition includes (a) from about 5 wt% to about 75 wt% of a polycarbonate component; (b) from about 10 wt% to about 60 wt% of a low refractive index polyester that is miscible with polycarbonate; (c) from about 10 wt% to about 30 % of an inherently dissipative polymer (IDP) having a refractive index at room temperature of at least 1.50; and (d) from about 5 wt% to about 75 wt% of a copolymer including polycarbonate and isophthalate terephthalate resorcinol (ITR). The combined weight percent value of all components does not exceed 100 wt. %, and all weight percent values are based on the total weight of the composition.

The polycarbonate may include a polycarbonate homopolymer, a polycarbonate copolymer, or a combination thereof. Generally, as used herein, the term or suffix "polycarbonate" means compositions having repeating structural carbonate units of the formula (1):

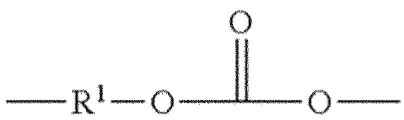

(1)

in which at least 60 percent of the total number of $R^1$ groups are aromatic organic radicals and the balance thereof are aliphatic, alicyclic, or aromatic radicals. In one aspect, each $R^1$ is an aromatic organic radical, for example a radical of the formula (2):

$A^1$-$Y^1$-$A^2$- (2)

wherein each of $A^1$ and $A^2$ is a monocyclic divalent aryl radical and $Y^1$ is a bridging radical having one or two atoms that separate $A^1$ from $A^2$. In an exemplary aspect, one atom separates $A^1$ from $A^2$. Illustrative non-limiting examples of radicals of this type are -O-, -S-, -S(O)-, $-S(O)_2-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene, cyclohexylidene, or isopropylidene.

Polycarbonates may be produced by the reaction of dihydroxy compounds having the formula HO-$R^1$-OH, which includes dihydroxy compounds of formula (3):

HO-$A^1$-$Y^1$-$A^2$-OH (3)

wherein $Y^1$, $A^1$ and $A^2$ are as described above. Also included are bisphenol compounds of general formula (4):

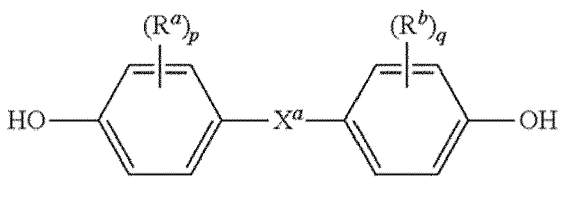

(4)

wherein $R^a$ and $R^b$ each represent a halogen atom or a monovalent hydrocarbon group and may be the same or different; p and q are each independently integers of 0 to 4; and

$X^a$ represents one of the groups of formula (5):

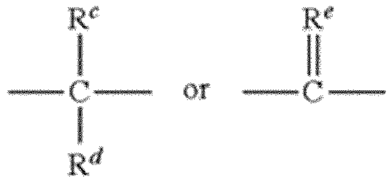

(5)

wherein $R^c$ and $R^d$ each independently represent a hydrogen atom or a monovalent linear or cyclic hydrocarbon group and $R^c$ is a divalent hydrocarbon group.

In an aspect, a heteroatom-containing cyclic alkylidene group includes at least one heteroatom with a valency of 2 or greater, and at least two carbon atoms. Heteroatoms for use in the heteroatom-containing cyclic alkylidene group include -O-, -S-, and - N(Z)-, where Z is a substituent group selected from hydrogen, hydroxy, $C_{1-12}$ alkyl, $C_{1-12}$ alkoxy, or $C_{1-12}$ acyl. Where present, the cyclic alkylidene group or heteroatom-containing cyclic alkylidene group may have 3 to 20 atoms, and may be a single saturated or unsaturated ring, or fused polycyclic ring system wherein the fused rings are saturated, unsaturated, or aromatic.

Other bisphenols containing substituted or unsubstituted cyclohexane units can be used, for example bisphenols of formula (6):

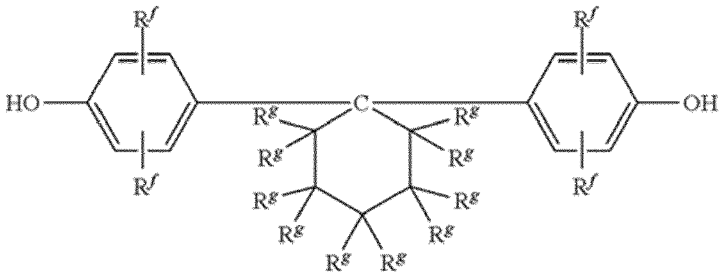

(6)

wherein each $R^f$ is independently hydrogen, $C_{1-12}$ alkyl, or halogen; and each $R^g$ is independently hydrogen or $C_{1-12}$ alkyl. The substituents may be aliphatic or aromatic, straight chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol containing polycarbonates, or a combination including at least one of the foregoing with other bisphenol polycarbonates, are supplied by Bayer Co. under the APEC® trade name. Other useful dihydroxy compounds having the formula HO-$R^1$-OH include aromatic dihydroxy compounds of formula (7):

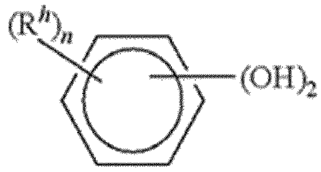

(7)

wherein each $R^h$ is independently a halogen atom, a $C_{1-10}$ hydrocarbyl such as a $C_{1-10}$ alkyl group, a halogen substituted $C_{1-10}$ hydrocarbyl such as a halogen-substituted $C_{1-10}$ alkyl group, and n is 0 to 4. The halogen is usually bromine.

Exemplary dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations including at least one of the foregoing dihydroxy compounds.

Specific examples of bisphenol compounds that may be represented by formula (3) include 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxy-t-butylphenyl)propane, 3,3-bis(4-hydroxyphenyl)phthalimidine, 2-phenyl-3,3-bis(4-hydroxyphenyl)phthalimidine (PPPBP), and 1,1-bis(4-hydroxy-3-methylphenyl)cyclohexane (DMBPC). Combinations including at least one of the foregoing dihydroxy compounds may also be used.

In a specific aspect, $X^a$ in formula (4) is a substituted, fused $C_{5-18}$ heterocycloalkylidene. In a specific aspect, a dihydroxyaromatic monomer including the substituted, fused $C_{5-18}$ heterocycloalkylidene is a 2-hydrocarbyl-3,3-bis(4-hydroxyaryl)phthalimidine (also referred to as a 2-hydrocarbyl-3,3-bis(4-hydroxyaryl)-2,3-dihydroisoindol-1-one) of the formula (8):

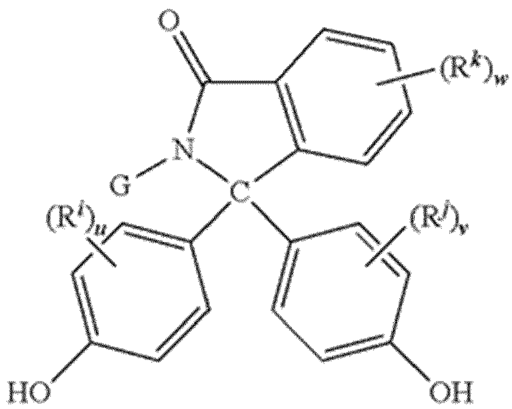

(8)

wherein $R^i$, $R^j$, and $R^k$ are independently $C_{1-12}$ hydrocarbyl, G is a $C_{1-12}$ alkyl or $C_{6-18}$ aromatic group, and u, v, and w are each independently an integer from 0 to 4. In an exemplary aspect, the dihydroxyaromatic monomer is 2-phenyl-3,3-bis(4-hydroxyphenyl)phthalimidine (PPPBP), having the formula (8a):

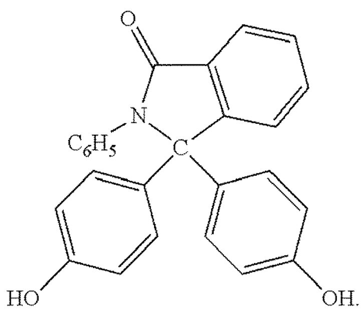

(8a)

The low refractive index polyester may include in some aspects poly(1,4-cyclohexylenedimethylene 1,4-cyclohexanedicarboxylate) (PCCD), polyethylene terephthalate (PET), polyethylene terephthalate glycol-modified (PETG), polycaprolactone (PCL), poly(ethylene oxide) (PEO), polybutylene terephthalate (PBT), polycyclohexylene dimethylene terephthalate (PCT), polycyclohexylene dimethylene terephthalate glycol (PCTG), polycyclohexylene dimethylene terephthalate acid (PCTA), or a combination thereof. In a particular aspect the low refractive index polyester includes PCCD. As used herein, "low refractive index" means the polymer has a refractive index of 1.6 or lower, or in specific aspects 1.55 or lower.

The term "inherently dissipative polymer" (IDP) refers to several materials that can be either melt-processed into polymeric resins or sprayed onto commercially available polymeric forms and shapes to improve conductive properties and overall physical performance. Typical, monomeric antistatic agents are glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, quaternary ammonium salts, quaternary ammonium resins, imidazoline derivatives, sorbitan esters, ethanolamides, betaines and mixtures of the foregoing.

Typical IDPs include copolyesteramides, polyether-polyamides, polyetheramide block copolymers, polyetheresteramide block copolymers, polyurethanes containing a polyalkylene glycol moiety, polyetheresters and mixtures thereof. Polymeric antistatic materials are desirable since they are typically fairly thermally stable and processable in the melt state in their neat form or in blends with other polymeric resins. The polyetheramides, polyetheresters and polyetheresteramides include block copolymers and grail copolymers both of which are obtained by the reaction between a polyamide-forming compound and/or a polyester-forming compound, and a compound containing a polyalkylene oxide unit. Polyamide forming compounds include aminocarboxylic acids such as ω-aminocaproic acid, ω-aminoenanthic acid, ω-aminocaplylic acid, ω-aminopelargonic acid, ω-aminocapric acid, 1,1-aminoundecanoic acid and 1,2-aminododecanoic acid; lactams such as ε-caprolactam and enanthlactam; a salt of a diamine with a dicarboxylic acid, such as hexamethylene diamine adipate, hexamethylene diamine sebacate, and hexamethylene diamine isophthalate; and a mixture of these polyamide-forming compounds. Suitable polyamide-forming compound include caprolactam, 1,2-aminododecanoic acid, or a combination of hexamethylene diamine and adipate. Commercially available IDPs include: Pelestat NC7530 (polyetheresteramide, PEEA) from Sanyo Chemical); IRGASTAT P16, available from CIBA Specialty Chemicals, manufactured by Atofina (Pebax MV1074) RI=1.508); Pelestat NC6321 (Sanyo Chemical sold in the Americas by Tomen); Pelestat 6500 with the same refractive index as Pelestat NC6321, a small molecule with salt or electrolyte added to it to increase its conductivity; Pelectron AS, available from Sanyo Chemical; and U1 and hSTAT2, available from Croda. hSTAT2 is a blend based on a polyether block polymer and a styrene copolymer. In a particular aspect the IDP includes PEEA or a polyether block polymer/styrene copolymer blend (e.g., hSTAT2). In further aspects the IDP includes a polyether block amide (PEBA).

The thermoplastic composition includes in some aspects a polycarbonate copolymer component including a polyester-polycarbonate copolymer. In a specific aspect, the polyester unit is derived from the reaction of isophthalic acid, terephthalic acid, and resorcinol (also known as an ITR resin). The polyester unit has the following structure:

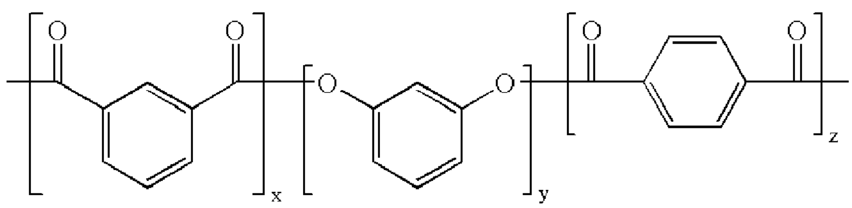

where x corresponds to the molar ratio of the isophthalate, y corresponds to the molar ratio of the resorcinol, and z corresponds to the molar ratio of the terephthalate; x, y, and z adding to 100 percent of the polyester unit. Such polyester-polycarbonates are available as LEXAN® SLX from SABIC. The concentration of polyester (ITR) resin may be least 5%, based on the number of moles in the polymer. In further aspects, the polyester and polycarbonate are used in a molar ratio of from about 5:95 to about 40:60 or more particularly from about 5:95 to about 35:65, depending on the properties desired. The polyester-polycarbonates may have a weight average molecular weight of from about 1,500 to about 100,000 or more particularly from about 2,000 to about 40,000. The polyester-polycarbonate polymer can be a copolymer, especially a block copolymer. In certain aspects the thermoplastic composition includes from about 5 wt% to about 75 wt% of the polycarbonate copolymer component including a polyester-polycarbonate copolymer.

In some aspects the composition further includes from greater than 0 wt% to about 75 wt% of a copolymer including polycarbonate and 3,3-bis(4-hydroxyphenyl)-2-phenylisoindolin-1-one (PPPBP). An example of such a copolymer is CXT resin, available from SABIC.

In certain aspects the composition further includes from greater than 0 wt% to about 75 wt% of a polycarbonate-siloxane copolymer. The polycarbonate-siloxane copolymer includes carbonate units and siloxane units. "Polycarbonate" is as defined above. The siloxane units (also referred to as polysiloxane blocks) are optionally of formula (9)

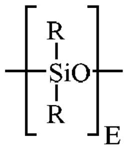
(9)

wherein each R is independently a $C_{1-13}$ monovalent organic group. For example, R can be a $C_{1-13}$ alkyl, C-$C_{13}$ alkoxy, $C_{2-13}$ alkenyl, $C_{2-13}$ alkenyloxy, $C_{3-6}$ cycloalkyl, $C_{3-6}$ cycloalkoxy, $C_{6-14}$ aryl, $C_{6-10}$ aryloxy, $C_{7-13}$ arylalkylene, $C_{7-13}$ arylalkylenoxy, $C_{7-13}$ alkylarylene, or $C_{7-13}$ alkylarylenoxy. The foregoing groups can be fully or partially halogenated with one or more of fluorine, chlorine, bromine, or iodine. In an aspect, where a transparent poly(carbonate-siloxane) is desired, R is unsubstituted by halogen. A combination of the foregoing R groups can be used in the same poly(carbonate-siloxane).

In an aspect, each R is independently a $C_{1-3}$ alkyl, $C_{1-3}$ alkoxy, $C_{3-6}$ cycloalkyl, C3-6 cycloalkoxy, $C_{6-14}$ aryl, $C_{6-10}$ aryloxy, $C_7$ arylalkylene, $C_7$ arylalkylenoxy, $C_7$ alkylarylene, or $C_7$ alkylarylenoxy. In still another aspect, each R is independently methyl, trifluoromethyl, or phenyl.

The value of E in formula (9) can vary widely depending on the type and relative amount of each component in the thermoplastic composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the polycarbonate-siloxane copolymer. Conversely, where E is of a higher value, e.g., greater than 40, a relatively lower amount of the polycarbonate-siloxane copolymer can be used. A combination of a first and a second (or more) polycarbonate-siloxanes can be used, wherein the average value of E of the first copolymer is less than the average value of E of the second copolymer.

Suitable siloxane units have been described, for example, in WO 2008/042500 A1, WO 2010/076680 A1, and WO 2016/174592 A1. In an aspect, the siloxane units are of formula (10)

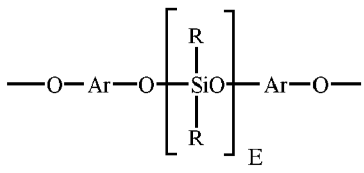
(10)

wherein E is as defined for formula (9); each R can be the same or different, and is as defined for formula (9); and Ar can be the same or different, and is a substituted or unsubstituted $C_6$-$C_{30}$ arylene, wherein the bonds are directly connected to an aromatic moiety. Ar groups in formula (10) can be derived from a $C_6$-$C_{30}$ dihydroxyarylene compound, for example a dihydroxy compound such as those described herein. Exemplary dihydroxy compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl)cyclohexane, bis(4-hydroxyphenyl sulfide), and 1,1-bis(4-hydroxy-t-butylphenyl)propane, or a combination thereof.

Specific examples of siloxane units of formula (10) include those of the formulas (11a) and (11b):

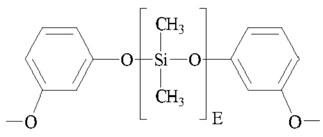 (11a) 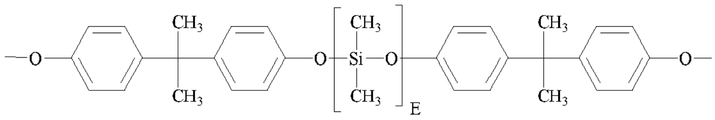 (11b)

wherein E is as described in Formula (9). In an aspect, E has an average value of 10 to 80 or 10 to 40, and in still another aspect, E has an average value of 40 to 80, or 40 to 70.

In another aspect, the siloxane units are of formula (12)

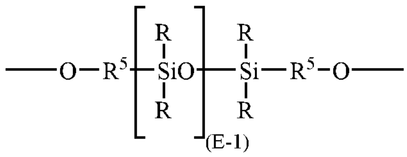

(12)

wherein R and E are as described for formula (9), and each $R^5$ is independently a divalent $C_{1-30}$ hydrocarbylene group, and wherein the polymerized polysiloxane unit is the reaction residue of its corresponding dihydroxy compound. In a specific aspect, the polydiorganosiloxane blocks are of formula (13):

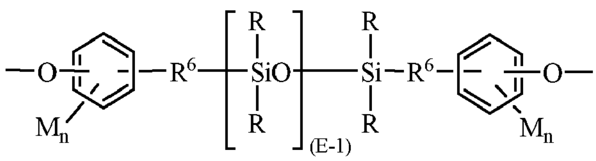

(13)

wherein R and E are as defined for formula (10). $R^6$ in formula (13) is a divalent $C_{2-8}$ aliphatic group. Each M in formula (13) can be the same or different, and can be a halogen, cyano, nitro, $C_{1-8}$ alkylthio, $C_{1-8}$ alkyl, $C_{1-8}$ alkoxy, $C_{2-8}$ alkenyl, $C_{2-8}$ alkenyloxy, $C_{3-8}$ cycloalkyl, $C_{3-8}$ cycloalkoxy, $C_{6-10}$ aryl, $C_{6-10}$ aryloxy, $C_{7-12}$ arylalkylene, $C_{7-12}$ arylalkylenoxy, $C_{7-12}$ alkylarylene, or $C_{7-12}$ alkylarylenoxy, wherein each n is independently 0, 1, 2, 3, or 4.

In an aspect in formula (13), M is bromo or chloro, an alkyl such as methyl, ethyl, or propyl, an alkoxy such as methoxy, ethoxy, or propoxy, or an aryl such as phenyl, chlorophenyl, or tolyl; $R^6$ is a dimethylene, trimethylene or tetramethylene; and R is a $C_{1-8}$ alkyl, haloalkyl such as trifluoropropyl, cyanoalkyl, or aryl such as phenyl, chlorophenyl or tolyl.

In another aspect in formula (13), R is methyl, or a combination of methyl and trifluoropropyl, or a combination of methyl and phenyl. In still another aspect in formula (13), R is methyl, M is methoxy, n is one, and $R^6$ is a divalent $C_{1-3}$ aliphatic group. Preferred polydiorganosiloxane blocks are of the formulas

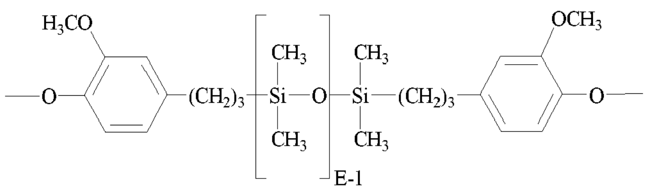

(13a),

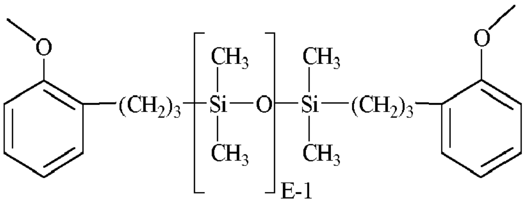

(13b),

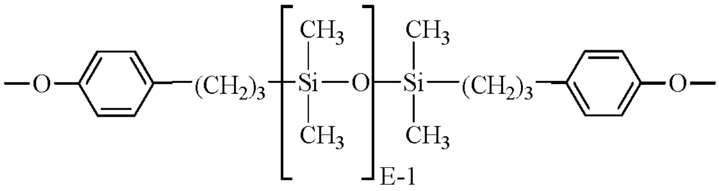

(13c),

or a combination thereof, wherein E has an average value of 10 to 100, preferably 20 to 60, more preferably 30 to 50, or 40 to 50.

In an aspect, the polycarbonate-siloxane copolymer includes carbonate units derived from bisphenol A, and repeating siloxane units (13a), (13b), (13c), or a combination thereof, wherein E has an average value of 10 to 100, or 20 to 60, or 30 to 60, or 40 to 60. In an aspect, the polycarbonate-siloxane copolymer includes carbonate units derived from bisphenol A and repeating siloxane units of formula (13a) (13b), or (13c), wherein E has an average value of 10 to 100, or 20 to 60, or 30 to 50, or 40 to 50.

The polycarbonate-siloxane copolymer can have a siloxane content of from about 5 wt% to about 45 wt% based on the total weight of the polycarbonate-siloxane copolymer. In particular the polycarbonate-siloxane copolymer may have a siloxane content of about 6 wt% (e.g., transparent-EXL (t-EXL) available from SABIC), of about 20 wt% (e.g., opaque-EXL (o-EXL) available from SABIC, or in some aspects about 40 wt%. As used herein, "siloxane content" of the polycarbonate-siloxane copolymer means the content of siloxane units based on the total weight of the polycarbonate-siloxane copolymer.

In certain aspects the PC-Si copolymer is added to the composition to achieve a total siloxane content in the composition of from about 1 wt% to about 8 wt%.

The composition may further include at least one additional additive, including but not limited to a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, and combinations thereof. The at least one additional additive may be included in the thermoplastic composition in any amount that will not significantly adversely affect the desired properties of the composition.

## Properties of thermoplastic compositions

Compositions according to aspects of the disclosure have improved properties as compared to conventional compositions. Including the IDP in the composition has a desirable effect of increasing surface resistivity, but it also has a detrimental effect on various properties of the composition including visual surface (e.g., gloss), initial color, light transmission, haze, thermal ageing and heat distortion properties. Compositions according to aspects of the disclosure include other components to mitigate some of the detrimental effect of adding the IDP to the composition.

Accordingly, in some aspects the composition has a surface resistivity (SR), as determined according to ASTM D257, of from about $10^8$ to about $10^{12}$ ohms per square (Ω/sq).

In further aspects the composition has a weatherability (dE) of less than 10 as determined according to ASTM D7869 and after 3000 hours of ageing. The 24-hour duration test cycle is shown in Table . It begins with a long dark spray period to saturate the coating with water. Step 2 simulates "dawn" with relatively low irradiance and temperature for 30 minutes followed by an extended period of high irradiance and higher temperature. Step 4 provides a cool down period before beginning a dark spray period. The steps of dark with spray, dawn, mid-day, and cool down then cycle four times to give a total of 24 hours per cycle. It applies 39.36 kJ/m$^2$/nm at 340 nm per cycle for an average of 1.64 kJ/h.

**Table 1 - ASTM D7869 weathering cycle**

| Step | Duration | Function | Irradiance | Black panel | Chamber | RH set | kJ/cycle |
|---|---|---|---|---|---|---|---|
| | (min) | | (W/m$^2$ @ 340) | (°C) | (°C) | (%) | |
| 1 | 240 | dark + spray | -- | 40 | 40 | 95 | |
| 2 | 30 | Light | 0.4 | 50 | 42 | 50 | 0.72 |
| 3 | 270 | Light | 0.8 | 70 | 50 | 50 | 12.96 |
| 4 | 30 | Light | 0.4 | 50 | 42 | 50 | 0.72 |
| 5 | 150 | dark + spray | -- | 40 | 40 | 95 | |
| 6 | 30 | dark + spray | -- | 40 | 40 | 95 | |

(continued)

| Step | Duration | Function | Irradiance | Black panel | Chamber | RH set | kJ/cycle |
|---|---|---|---|---|---|---|---|
| | (min) | | ($W/m^2$ @ 340) | (°C) | (°C) | (%) | |
| 7 | 20 | Light | 0.4 | 50 | 42 | 50 | 0.48 |
| 8 | 120 | Light | 0.8 | 70 | 50 | 50 | 5.76 |
| 9 | 10 | Dark | -- | 40 | 40 | 50 | |
| 10 | Repeat steps 6-9 an additional 3 times (for a total of 24 h = 1 cycle) | | | | | | 18.72 |
| | | | | | Total kJ/24 h | | 39.36 |

In other aspects the composition has a transmission of at least 40% as determined in accordance with ASTM D1003.

In specific aspects the composition has a heat distortion temperature of at least 65 °C as determined in accordance with ISO 75.

In further aspects the composition has a notched Izod impact strength of at least 15 kilojoules per square meter ($kJ/m^2$), or in specific aspects at least 80 $kJ/m^2$, as measured at 23°C in accordance with ISO 180.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form the articles. In a particular aspect the article may be incorporated into a lighting application. Specific lighting applications include, but are not limited to, fixtures, housings, enclosures, switches, and flashlights. In further aspects the article may be incorporated

into an enclosure, helmet, handheld devices, telephone, walkie-talkie, cable box, camera, car part, weighing device, IoT device, plastic tool, fork-lift truck, power supply box, transport belt, drill, remote control, suction arm, vacuum cleaner, ventilator, pump, or a crane. Other suitable articles include, but are not limited to: a display (of, e.g., a watch, phone or LCD screen); enclosure; see-through box; container for visual display of oil levels; ventilator; hand-held device (e.g., flashlight, flow meter, plastic button, led light, camera); a lid of a junction box; weight balance; safety goggles; face shield; connector; vacuum cleaner; valve; drum; container; button; or a safety latch.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

(a) from about 5 wt% to about 75 wt% of a polycarbonate component;
(b) from about 10 wt% to about 60 wt% of a low refractive index polyester that is miscible with polycarbonate;
(c) from about 10 wt% to about 30 % of an inherently dissipative polymer (IDP) having a refractive index at room temperature of at least 1.50; and
(d) from about 5 wt% to about 75 wt% of a copolymer comprising polycarbonate and isophthalate terephthalate resorcinol (ITR),

wherein the combined weight percent value of all components does not exceed 100 wt. %, and all weight percent values are based on the total weight of the composition.

Aspect 2. The thermoplastic composition according to Aspect 1, further comprising from greater than 0 wt% to about 75 wt% of a copolymer comprising polycarbonate and 3,3-bis(4-hydroxyphenyl)-2-phenylisoindolin-1-one (PPPBP) or polycarbonate and bisphenol isophorone (BPI).

Aspect 3. The thermoplastic composition according to Aspect 1 or 2, further comprising from greater than 0 wt% to about 75 wt% of a polycarbonate-siloxane copolymer.

Aspect 4. The thermoplastic composition according to Aspect 3, wherein the polycarbonate-siloxane copolymer has a siloxane content of from 5 wt% to 45 wt%.

Aspect 5. The thermoplastic composition according to any of Aspects 1 to 4, wherein the polycarbonate component comprises a polycarbonate homopolymer, a polycarbonate copolymer, or a combination thereof.

Aspect 6. The thermoplastic composition according to any of Aspects 1 to 5, wherein the low refractive index polyester comprises poly(1,4-cyclohexylenedimethylene 1,4-cyclohexanedicarboxylate) (PCCD), polyethylene terephthalate (PET), polyethylene terephthalate glycol-modified (PETG), polycaprolactone (PCL), poly(ethylene oxide) (PEO), polybutylene terephthalate (PBT), polycyclohexylene dimethylene terephthalate (PCT), polycyclohexylene dimethylene terephthalate glycol (PCTG), polycyclohexylene dimethylene terephthalate acid (PCTA), or a combination thereof.

Aspect 7. The thermoplastic composition according to any of Aspects 1 to 6, wherein the IDP comprises a polyetheresteramide (PEEA) or a polyether block amide (PEBA).

Aspect 8. The thermoplastic composition according to any of Aspects 1 to 7, wherein the composition has a surface resistivity of from about $10^8$ to about $10^{12}$ ohms per square ($\Omega$/sq).

Aspect 9. The thermoplastic composition according to any of Aspects 1 to 8, wherein the composition has a weatherability (dE) of less than 10 as determined according to ASTM D7869 and after 3000 hours of ageing.

Aspect 10. The thermoplastic composition according to any of Aspects 1 to 8, wherein the composition has a weatherability (dE) of less than 5 as determined according to ASTM D7869 and after 3000 hours of ageing.

Aspect 11. The thermoplastic composition according to any of Aspects 1 to 10, wherein the composition has a transmission of at least 40% as determined in accordance with ASTM D1003.

Aspect 12. The thermoplastic composition according to any of Aspects 1 to 11, wherein the composition has a heat distortion temperature of at least 65 °C as determined in accordance with ISO 75.

Aspect 13. The thermoplastic composition according to any of Aspects 1 to 12, wherein the composition has a notched Izod impact strength of at least 15 kilojoules per square meter (kJ/$m^2$), as measured at 23°C in accordance with ISO 180.

Aspect 14. An article formed from the thermoplastic composition according to any of Aspects 1 to 13.

Aspect 15. The article according to Aspect 14, wherein the article is a display (of, e.g., a watch, phone or LCD screen), enclosure, see-through box, container for visual display of oil levels, ventilator, hand-held device (e.g., flashlight, flow meter, plastic button, led light, camera), a lid of a junction box, weight balance, safety goggles, face shield, connector, vacuum cleaner, valve, drum, container, button, or a safety latch.

Aspect 16. The article according to Aspect 14, wherein the article is a component of a lighting fixture.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials used in the compositions described herein are listed in Table 2 below:

**Table 2 - Materials Used**

| Component | Description | Source |
|---|---|---|
| t-EXL | Transparent polycarbonate-siloxane copolymer (6% siloxane content) | SABIC |
| o-EXL | Opaque polycarbonate-siloxane copolymer (20% siloxane content) | SABIC |
| PC-Si (40%) | Polycarbonate-siloxane copolymer (40% siloxane content) | SABIC |
| PC105 | Linear PC, low molecular weight, Mw 30 kg/mol | SABIC |
| PC198 | Branched PC, high molecular weight, Mw 34 kg/mol | SABIC |
| PC175 | Linear PC, medium molecular weight, Mw 22 kg/mol | SABIC |
| PCCD | Polyester miscible with PC, low refractive index, RI=1.51 | |
| AKESTRA™ 110 | High-heat polyethylene terephthalate (PET) copolymer | Mitsubishi Gas Chemicals |
| PETS | Pentaerythritol Tetrastearate | |
| SLX 20/80 | Weatherable PC copolymer including polycarbonate and isophthalate terephthalate resorcinol (ITR) | SABIC |
| HsSTAT | Anti-static agent, Ionphase™ hSTAT2 | Croda |
| NC7530 | Anti-static agent, Pelestat NC7530 (polyetheresteramide) (PEEA) | Sanyo Chemical |
| 6500 | Anti-static agent, Pelestat 6500 (PEEA) | Sanyo Chemical |
| PELECTRON AS | Anti-static agent (PEEA) | Sanyo Chemical |

The formed compositions were tested for various properties according to the following:

Weatherability (dE) relates to color change, which is determined based on the difference in L,a,b values (light, red and blue) before and after exposure. dE was determined according to according to ASTM D7869.

Notched Izod impact strength was determined in accordance with ISO 180 at 23 °C on a sample of 80mm x 10 mm x 4 mm.

Flexural modulus and strength were determined in accordance with ISO 178.

Transmission was determined in accordance with ASTM D1003

Deflection temperature was determined in accordance with ISO 75/A, flatwise at 1.8 megapascals (MPa).

Surface resistivity was determined in accordance with ASTM D257/IEC 60079-0:2017.

### Example 1

Thermoplastic compositions were formed according to Tables 3A and 3B. The properties of the compositions are provided in Tables 3A and 3B.

**Table 3A - Compositions C1.1-C1.5**

| Components (wt%) | C1.1 | C1.2 | C1.3 | C1.4 | C1.5 |
|---|---|---|---|---|---|
| PCCD (4000 poise) | 50.41 | 50.41 | 50.41 | 50.41 | 50.41 |
| NC7530 | 21 | 14.7 | 0 | 14.7 | 14.7 |
| 6500 | 0 | 6.3 | 21 | 6.3 | 6.3 |
| PC105 | 28.36 | 28.36 | 28.36 | 0 | 0 |
| PC198 | 0 | 0 | 0 | 16.9 | 0 |
| SLX 20/80 | 0 | 0 | 0 | 11.26 | 0 |
| t-EXL | 0 | 0 | 0 | 0 | 28.36 |
| HsSTAT | 0 | 0 | 0 | 0 | 0 |
| PELECTRON AS | 0 | 0 | 0 | 0 | 0 |
| PC175 | 0 | 0 | 0 | 0 | 0 |
| HFD | 0 | 0 | 0 | 0 | 0 |
| Other additives | 0.23 | 0.23 | 0.23 | 0.43 | 0.23 |
| Total: | 100 | 100 | 100 | 100 | 100 |

**Table 3B - Compositions C1.6-C1.10**

| Components (wt%) | C1.6 | C1.7 | C1.8 | C1.9 | C1.10 |
|---|---|---|---|---|---|
| PCCD (4000 poise) | 50.41 | 50.41 | 50.41 | 50.41 | 0 |
| NC7530 | 0 | 0 | 14.7 | 14.7 | 14.7 |
| 6500 | 0 | 0 | 6.3 | 6.3 | 6.3 |
| PC105 | 28.36 | 28.36 | 0 | 0 | 0 |
| PC198 | 0 | 0 | 28.36 | 0 | 0 |
| SLX 20/80 | 0 | 0 | 0 | 0 | 0 |
| t-EXL | 0 | 0 | 0 | 0 | 0 |
| HsSTAT | 21 | 0 | 0 | 0 | 0 |
| PELECTRON AS | 0 | 21 | 0 | 0 | 0 |
| PC175 | 0 | 0 | 0 | 28.36 | 0 |
| HFD | 0 | 0 | 0 | 0 | 78.27 |
| Other additives | 0.23 | 0.23 | 0.23 | 0.23 | 0.73 |
| Total: | 100 | 100 | 100 | 100 | 100 |

**Table 4A - Properties of Compositions C1.1-C1.5**

| | C1.1 | C1.2 | C1.3 | C1.4 | C1.5 |
|---|---|---|---|---|---|
| dE after ageing (hrs) | | | | | |
| 0 | 0 | 0 | 0 | 0 | 0 |
| 67 | 2.9 | 3.1 | 4.8 | 3.7 | 1.5 |
| 684 | 5.9 | 5.2 | 4.6 | 4.6 | 4.7 |
| 1503 | 10.1 | 6.9 | 3.3 | 4.2 | 7.9 |

(continued)

| | C1.1 | C1.2 | C1.3 | C1.4 | C1.5 |
|---|---|---|---|---|---|
| dE after ageing (hrs) | | | | | |
| 3000 | 15.6 | 11.2 | 4.2 | 2.5 | 12.9 |
| | | | | | |
| Notched Izod Impact Strength-Avg (kJ/m2) (23_°C) | 85.7 | 85.2 | 83 | 85.57 | 89.85 |
| Flexural Modulus-Avg (MPa) | 1159 | 1216.8 | 1207.6 | 1223.8 | 1169.4 |
| Flexural Strength-Avg (MPa) | 51.21 | 51.49 | 51.34 | 53.32 | 50 |
| L-Avg | 94.4 | 94.3 | - | 94.2 | 94.9 |
| a-Avg | -0.1 | -0.2 | - | -0.3 | -0.3 |
| b-Avg | 4.2 | 4 | - | 4.5 | 4.3 |
| L-Avg | - | - | 81.7 | - | - |
| a-Avg | - | - | -0.3 | - | - |
| b-Avg | - | - | 12.2 | - | - |
| Transparency (%) | 87.3 | 88 | - | 87.2 | 88.8 |
| Deflection temp-Avg (°C) | 68.95 | 70.6 | 70.6 | 69 | 66.6 |

**Table 4B - Properties of Compositions C1.6-C1.10**

| | C1.6 | C1.7 | C1.8 | C1.9 | C1.10 |
|---|---|---|---|---|---|
| dE after ageing (hrs) | | | | | |
| 0 | 0 | 0 | 0 | 0 | - |
| 67 | 3.6 | 9.8 | 2.6 | 4.6 | - |
| 684 | 2.7 | 11.2 | 4.6 | 7.2 | - |
| 1503 | 5.6 | 10.4 | 6.7 | 8.9 | - |
| 3000 | 9.3 | 11.8 | 11.0 | 13.1 | - |
| | | | | | |
| Notched Izod Impact Strength-Avg (kJ/m2) (23 °C) | 74.96 | 82.91 | 82.59 | 84.3 | - |
| Flexural Modulus-Avg (MPa) | 1276.4 | 1113.6 | 1212.6 | 1230 | - |
| Flexural Strength-Avg (MPa) | 52.96 | 45.68 | 54.04 | 54.24 | - |
| L-Avg | - | - | 94.6 | 94.5 | - |
| a-Avg | - | - | -0.2 | -0.2 | - |
| b-Avg | - | - | 3.6 | 3.4 | - |
| L-Avg | 85.7 | 76 | - | - | - |
| a-Avg | -0.6 | -0.8 | - | - | - |
| b-Avg | 8.5 | 42 | - | - | - |
| Transparency (%) | - | - | 88.2 | 88 | - |
| Deflection temp-Avg (°C) | 71.6 | 66.35 | 70.3 | 69.8 | - |

Inventive composition C1.4 had the best weatherability properties in terms of color shift after weathering for 3000 hours (hrs) - the composition had a dE of less than 2.45, as contrasted with other compositions which have a dE

of 10 or more. From the data it is observed that a weatherable anti-static transparent composition can be formed by including relatively small amounts of a weatherable copolymer including copolymer polycarbonate and isophthalate terephthalate resorcinol (ITR) (e.g., SLX).

**Example 2**

Further compositions were formed and tested according to Tables 5A and 5B:

**Table 5A - Compositions C2.1-C2.6**

| **Components (wt%)** | **C2.1** | **C2.2** | **C2.3** | **C2.4** | **C2.5** | **C2.6** |
|---|---|---|---|---|---|---|
| PCCD | 47.87 | 50.41 | 50.41 | 50.41 | 50.41 | 50.41 |
| NC7530 | 17.5 | 10.5 | 14.7 | 14.7 | 14.7 | 14.7 |
| AT6500 | 7.5 | 10.5 | 6.3 | 6.3 | 6.3 | 6.3 |
| PC198 | 26.9 | | 0 | 0 | 0 | 0 |
| SLX 20/80 | 0 | 0 | 28.16 | | 19.712 | 23.936 |
| t-EXL | 0 | 28.36 | 0 | 28.16 | 0 | 0 |
| o-EXL | | | | | 8.448 | |
| PC-Si (40%) | | | | | | 4.224 |
| PELECTRON AS | 0 | 0 | 0 | 0 | 0 | 0 |
| Other additives | 0.23 | 0.23 | 0.43 | 0.43 | 0.43 | 0.43 |
| Total | 100 | 100 | 100 | 100 | 100 | 100 |
| | | | | | | |
| **Properties:** | | | | | | |
| Transparency (%) | 81.25 | 84 | 82.125 | 83.2 | 51.5 | 77.1 |
| Haze (%) | 15.15 | 11.075 | 23.25 | 10.775 | 59.025 | 11.575 |

**Table 5B - Compositions C2.7-C2.11**

| **Components (wt%)** | **C2.7** | **C2.8** | **C2.9** | **C2.10** | **C2.11** |
|---|---|---|---|---|---|
| PCCD | 50.41 | 50.41 | 50.41 | 50.41 | 50.41 |
| NC7530 | 14.7 | 14.7 | 14.7 | 14.7 | 10.5 |
| AT6500 | 6.3 | 6.3 | 6.3 | 6.3 | |
| PC198 | 0 | 28.16 | 28.16 | 27.86 | |
| SLX 20/80 | 14.08 | 0 | 0 | 0 | 0 |
| t-EXL | 14.08 | 0 | 0 | 0 | 27.86 |
| o-EXL | | | | | |
| PC-Si (40%) | | | | | |
| PELECTRON AS | | | | | 10.5 |
| Other additives | 0.43 | 0.43 | 0.43 | 0.73 | 0.73 |
| Total | 100 | 100 | 100 | 100 | 100 |
| | | | | | |
| **Properties:** | | | | | |
| Transparency (%) | 83.925 | - | 72.325 | 81.95 | 75.325 |

(continued)

| Properties: | | | | | |
|---|---|---|---|---|---|
| Haze (%) | 12.425 | - | 36.6 | 19.05 | 40.175 |

From this data it is observed that replacing a transparent PC with a PC-Si copolymer having a siloxane content of 6% (e.g., t-EXL) or with a PC-Si copolymer having a siloxane content of 40% (PC-Si (40%)) provides the compositions with improved transmission and/or haze when a weatherable copolymer including copolymer polycarbonate and isophthalate terephthalate resorcinol (ITR) (e.g., SLX) is also included. For example, C2.3 shows that the incorporation of a more substantial amount of SLX copolymer increases the haze level up to 23%, whereas the addition of the same amount of t-EXL (C2.4) does not result in an increased haze level. The combination of SLX with t-EXL and PC-Si (40%) (C2.6 and C2.7) had low haze levels even when the weatherable copolymer including copolymer polycarbonate and isophthalate terephthalate resorcinol (ITR) (e.g., SLX) was included.

**Example 3**

Further compositions were formed and tested according to Tables 6A-6C:

**Table 6A - Compositions C3.1-C3.6**

| Components (wt%) | C3.1 | C3.2 | C3.3 | C3.4 | C3.5 | C3.6 |
|---|---|---|---|---|---|---|
| PC198 | 17.4 | 17.9 | 26.2 | 34.4 | 18.7 | 27.3 |
| PCCD | 50.5 | 52 | 43.8 | 35.5 | 54.3 | 45.6 |
| NC7530 | 21 | 21 | 21 | 21 | 18 | 18 |
| HFD | 0 | 0 | 0 | 0 | 0 | 0 |
| SLX | 11 | 9 | 9 | 9 | 9 | 9 |
| t-EXL | 0 | 0 | 0 | 0 | 0 | 0 |
| Akestra™ 110 | 0 | 0 | 0 | 0 | 0 | 0 |
| | | | | | | |
| **Properties** | | | | | | |
| HDT (°C) | 71.5 | 69.6 | 74.7 | 84.1 | 69.9 | 76.4 |
| SR (Ω/sq.) | 1.69E+ 12 | 1.60E+ 12 | 2.15E+ 12 | 2.70E+ 12 | 2.20E+ 12 | 3.30E+ 12 |
| Transmission (%) | 83.4 | 82.2 | 83.8 | 71.5 | 83.6 | 85.2 |
| Haze (%) | 11.5 | 15.7 | 25 | 70.5 | 14.5 | 22.8 |

**Table 6B - Compositions C3.6-C3.12**

| Components (wt%) | C3.7 | C3.8 | C3.9 | C3.10 | C3.11 | C3.12 |
|---|---|---|---|---|---|---|
| PC198 | 35.9 | 19.4 | 28.4 | 37.4 | 28 | 36.9 |
| PCCD | 37 | 56.5 | 47.5 | 38.6 | 46.9 | 38.1 |
| NC7530 | 18 | 15 | 15 | 15 | 18 | 18 |
| HFD | 0 | 0 | 0 | 0 | 0 | 0 |
| SLX | 9 | 9 | 9 | 9 | 7 | 7 |
| t-EXL | 0 | 0 | 0 | 0 | 0 | 0 |
| Akestra™ 110 | 0 | 0 | 0 | 0 | 0 | 0 |
| | | | | | | |

(continued)

| Properties | | | | | | |
|---|---|---|---|---|---|---|
| HDT (°C) | 84.2 | 70.6 | 78.7 | 85.9 | 77.3 | 85.2 |
| SR (Ω/sq.) | 4.00E+ 12 | 4.90E+ 12 | 8.00E+ 12 | 9.65E+ 12 | 3.95E+ 12 | 4.50E+ 12 |
| Transmission (%) | 72.2 | 85.2 | 86.1 | 75.1 | 86.5 | 74.9 |
| Haze (%) | 66.8 | 12.6 | 21.2 | 61.3 | 15.6 | 62.2 |

**Table 6C - Compositions C3.13-C3.17**

| Components (wt%) | C3.13 | C3.14 | C3.15 | C3.16 | C3.17 |
|---|---|---|---|---|---|
| PC198 | 11.8 | 20 | 23.39 | 21.19 | 42.39 |
| PCCD | 32.1 | 0 | 15 | 0 | 0 |
| NC7530 | 18 | 0 | 15 | 15 | 15 |
| HFD | 0 | 39.9 | 0 | 0 | 0 |
| SLX | 9 | 40.1 | 0 | 0 | 0 |
| t-EXL | 0 | 0 | 23.39 | 21.19 | 0 |
| Akestra™ 110 | 29.1 | 0 | 23 | 42.39 | 42.39 |
| | | | | | |
| **Properties** | | | | | |
| HDT (°C) | 74.1 | 119.3 | 88.4 | 92.3 | 95.4 |
| SR (Ω/sq.) | 4.10E+12 | - | 3.00E+ 12 | 3.00E+ 12 | 2.00E+12 |
| Transmission (%) | 87.4 | 89.6 | 60 | 54 | 50 |
| Haze (%) | 7.6 | 1.6 | 88 | 95 | 99 |

These compositions demonstrate the use of PET (Akestra™ 110) as an alternative for PCCD. Akestra™ 110 is a high-heat PET copolymer, which can be used to increase the heat distortion temperature (HDT) of the blend while still retaining an acceptable level of light transmission. Composition C3.13 includes a blend of PCCD, PET and PC, and has a high light transmission and very low haze. Composition C3.16 is a blend consisting of PC, t-EXL (6 wt% siloxane), Akestra™ 110, and 15 wt. % anti-static agent. It has improved light transmission and haze when compared to composition C3.17 which does not contain t-EXL.

**Example 4**

Further compositions were formed and tested as shown in Tables 7A and 7B:

**Table 7A - Compositions C4.1-C4.5**

| Components (wt%) | C4.1 | C4.2 | C4.3 | C4.4 | C4.5 |
|---|---|---|---|---|---|
| Stabilizer | 0.2 | 0.2 | 0.2 | 0.2 | 0.2 |
| PETS | 0.2 | 0.2 | 0.2 | 0.2 | 0.2 |
| H3PO3 | 0.05 | 0.05 | | 0.05 | 0.05 |
| NC7530 | 21 | 21 | 21 | 21 | 21 |
| PELESTAT 6500 | 0 | | | | |
| t-EXL | 28 | 28 | 28 | 18 | 10 |
| PC-Si (40%) | | 0 | 0 | | 8 |

(continued)

| Components (wt%) | C4.1 | C4.2 | C4.3 | C4.4 | C4.5 |
|---|---|---|---|---|---|
| SLX | 0 | 0 | 0 | 10 | 10 |
| PCCD | 50.05 | 49.55 | 50 | 50.05 | 50.05 |
| ECN1299D | 0.5 | 1 | 0.5 | 0.5 | 0.5 |
| QUALIMER BN-1 | 0 | 0 | 0.1 | 0 | 0 |
| ML7684-111N | | | | | |
| | | | | | |
| **Properties** | | | | | |
| Transmission (%) | - | 74.55 | 75.1 | 56.95 | 46.6 |
| Haze (%) | - | 41.2 | 35.3 | 85.5 | 100 |

**Table 7B - Compositions C4.6-C4.10**

| Components (wt%) | C4.6 | C4.7 | C4.8 | C4.9 | C4.10 |
|---|---|---|---|---|---|
| Stabilizer | 0.2 | 0.2 | 0.2 | 0.2 | 0.2 |
| PETS | 0.2 | 0.2 | 0.2 | 0.2 | 0.2 |
| H3PO3 | 0.05 | 0.05 | 0.05 | 0.05 | |
| NC7530 | 15 | 13.5 | 6 | 21 | |
| PELESTAT 6500 | 6 | 7.5 | 15 | | |
| t-EXL | 18 | | | 29 | 0 |
| PC-Si (40%) | 10 | 14 | 28 | 10 | 49.8 |
| SLX | 0 | 14 | 0 | 0 | 0 |
| PCCD | 50.05 | 50.05 | 50.05 | 39.05 | 0 |
| ECN1299D | 0.5 | 0.5 | 0.5 | 0.5 | 0 |
| QUALIMER BN-1 | | 0 | 0 | 0 | 0 |
| ML7684-111N | | | | | 49.8 |
| | | | | | |
| **Properties** | | | | | |
| Transmission (%) | 64.23 | 39.45 | 49.8 | 69.55 | - |
| Haze (%) | 65.23 | 102.5 | 93.35 | 59.85 | - |

The data demonstrates that replacing some of the PCCD with PC-Si (40%) provides compositions having good transmission and haze properties. Compare, for example, composition C4.9 which has PCCD partially replaced with PC-Si (40%) with compositions C4.2 and C4.3. In addition, comparison of compositions C4.2 and C4.3 with C4.4 demonstrates the effect of including a copolymer including polycarbonate and isophthalate terephthalate resorcinol (ITR) (e.g., SLX), where improved transmission properties were observed.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less

than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   (a) from about 5 wt% to about 75 wt% of a polycarbonate component;
   (b) from about 10 wt% to about 60 wt% of a low refractive index polyester that is miscible with polycarbonate;
   (c) from about 10 wt% to about 30 % of an inherently dissipative polymer (IDP) having a refractive index at room temperature of at least 1.50; and
   (d) from about 5 wt% to about 75 wt% of a copolymer comprising polycarbonate and isophthalate terephthalate resorcinol (ITR),

   wherein the combined weight percent value of all components does not exceed 100 wt. %, and all weight percent values are based on the total weight of the composition.

2. The thermoplastic composition according to claim 1, further comprising from greater than 0 wt% to about 75 wt% of a copolymer comprising polycarbonate and 3,3-bis(4-hydroxyphenyl)-2-phenylisoindolin-1-one (PPPBP) or polycarbonate and bisphenol isophorone (BPI).

3. The thermoplastic composition according to claim 1 or 2, further comprising from greater than 0 wt% to about 75 wt% of a polycarbonate-siloxane copolymer.

4. The thermoplastic composition according to claim 3, wherein the polycarbonate-siloxane copolymer has a siloxane content of from 5 wt% to 45 wt%.

5. The thermoplastic composition according to any of claims 1 to 4, wherein the polycarbonate component comprises a polycarbonate homopolymer, a polycarbonate copolymer, or a combination thereof.

6. The thermoplastic composition according to any of claims 1 to 5, wherein the low refractive index polyester comprises poly(1,4-cyclohexylenedimethylene 1,4-cyclohexanedicarboxylate) (PCCD), polyethylene terephthalate (PET), polyethylene terephthalate glycol-modified (PETG), polycaprolactone (PCL), poly(ethylene oxide) (PEO), polybutylene terephthalate (PBT), polycyclohexylene dimethylene terephthalate (PCT), polycyclohexylene dimethylene terephthalate glycol (PCTG), polycyclohexylene dimethylene terephthalate acid (PCTA), or a combination thereof.

7. The thermoplastic composition according to any of claims 1 to 6, wherein the IDP comprises a polyetheresteramide (PEEA) or a polyether block amide (PEBA).

8. The thermoplastic composition according to any of claims 1 to 7, wherein the composition has a surface resistivity of from about $10^8$ to about $10^{12}$ ohms per square (Ω/sq).

9. The thermoplastic composition according to any of claims 1 to 8, wherein the composition has a weatherability (dE) of less than 10 as determined according to ASTM D7869 and after 3000 hours of ageing.

10. The thermoplastic composition according to any of claims 1 to 8, wherein the composition has a weatherability (dE) of less than 5 as determined according to ASTM D7869 and after 3000 hours of ageing.

11. The thermoplastic composition according to any of claims 1 to 10, wherein the composition has a transmission of at least 40% as determined in accordance with ASTM D1003.

12. The thermoplastic composition according to any of claims 1 to 11, wherein the composition has a heat distortion temperature of at least 65 °C as determined in accordance with ISO 75.

**13.** The thermoplastic composition according to any of claims 1 to 12, wherein the composition has a notched Izod impact strength of at least 15 kilojoules per square meter ($kJ/m^2$), as measured at 23°C in accordance with ISO 180.

**14.** An article formed from the thermoplastic composition according to any of claims 1 to 13.

**15.** The article according to claim 14, wherein the article is a component of a lighting fixture.

Europäisches Patentamt
European Patent Office
Office européen des brevets

# EUROPEAN SEARCH REPORT

Application Number
EP 20 21 7997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2007/049703 A1 (MURRAY MICHAEL C [CA] ET AL) 1 March 2007 (2007-03-01)<br>* paragraph [0073] - paragraph [0075]; example 3; table 1 * | 1,5-15<br>2-4 | INV.<br>C08L67/02<br>C08L69/00<br><br>ADD.<br>C08G63/64<br>C08G63/199<br>C08G65/26<br>C08G69/40<br>C08G69/44 |
| Y<br>A | US 2008/119597 A1 (CHAKRAVARTI SHREYAS [US] ET AL) 22 May 2008 (2008-05-22)<br>* paragraph [0090] - paragraph [0118]; examples E3, C11; tables 1, 4, C * | 1,5-15<br>2-4 | |
| A | US 2008/161507 A1 (CHAKRAVARTI SHREYAS [US] ET AL) 3 July 2008 (2008-07-03)<br>* paragraph [0122] - paragraph [0135]; examples 7, 11, 14; tables 5, 15, 16 * | 1-15 | |
| A | WO 2012/145465 A1 (LUBRIZOL ADVANCED MAT INC [US]; LU QIWEI [US]; CAO FEINA [US]) 26 October 2012 (2012-10-26)<br>* claims 1, 16; examples 1-2, 1-3, 1-4, 1-5; tables I, II * | 1-15 | |
| | | | TECHNICAL FIELDS SEARCHED (IPC) |
| | | | C08G<br>C08L |

The present search report has been drawn up for all claims

1

| Place of search | Date of completion of the search | Examiner |
|---|---|---|
| The Hague | 17 June 2021 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 21 7997

This annex lists the patent family members relating to the patent documents cited in the above-mentioned European search report. The members are as contained in the European Patent Office EDP file on
The European Patent Office is in no way liable for these particulars which are merely given for the purpose of information.

17-06-2021

| Patent document cited in search report | Publication date | Patent family member(s) | Publication date |
|---|---|---|---|
| US 2007049703 A1 | 01-03-2007 | NONE | |
| US 2008119597 A1 | 22-05-2008 | AT 482997 T | 15-10-2010 |
| | | EP 2084227 A1 | 05-08-2009 |
| | | KR 20090087082 A | 14-08-2009 |
| | | US 2008119597 A1 | 22-05-2008 |
| | | WO 2008063724 A1 | 29-05-2008 |
| US 2008161507 A1 | 03-07-2008 | AT 482998 T | 15-10-2010 |
| | | EP 2097482 A1 | 09-09-2009 |
| | | US 2008161507 A1 | 03-07-2008 |
| | | WO 2008082706 A1 | 10-07-2008 |
| WO 2012145465 A1 | 26-10-2012 | CA 2832319 A1 | 26-10-2012 |
| | | CN 103547629 A | 29-01-2014 |
| | | EP 2699637 A1 | 26-02-2014 |
| | | KR 20140027283 A | 06-03-2014 |
| | | TW 201247857 A | 01-12-2012 |
| | | US 2014031478 A1 | 30-01-2014 |
| | | WO 2012145465 A1 | 26-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008042500 A1
- WO 2010076680 A1
- WO 2016174592 A1


### Non-patent literature cited in the description


- *CHEMICAL ABSTRACTS,* 80-05-7